# EUROPÄISCHE PATENTSCHRIFT

(11) **EP 3 193 015 B1**
(45) Veröffentlichungstag und Bekanntmachung des Hinweises auf die Patenterteilung: **28.11.2018**
(21) Anmeldenummer: 16151198.5
(22) Anmeldetag: 14.01.2016
(51) Int. Cl.: F04B 13/00, F04B 51/00, B01L 3/02, F04B 49/06, G01N 35/10

(54) **VERFAHREN ZUR ÜBERPRÜFUNG DER FUNKTIONSFÄHIGKEIT EINER DOSIERPUMPE**
METHOD FOR CHECKING THE FUNCTION OF A DOSING PUMP
PROCÉDÉ DE VÉRIFICATION DE LA CAPACITÉ DE FONCTIONNEMENT D'UNE POMPE DE DOSAGE

(43) Veröffentlichungstag der Anmeldung: 19.07.2017
(73) Patentinhaber: Siemens Healthcare Diagnostics Products GmbH, 35041 Marburg (DE)
(72) Erfinder: Kotulla, Guenther, 65934 Frankfurt (DE)

(56) Entgegenhaltungen:
- EP-A1- 0 681 184
- WO-A1-92/14930
- WO-A1-96/08648
- DE-A1-102006 002 763

## Beschreibung

Die vorliegende Erfindung liegt auf dem Gebiet der automatischen Analysegeräte und betrifft eine Dosierpumpe, beispielsweise für eine Pipettiervorrichtung, sowie ein Verfahren zur Überprüfung ihrer Funktionsfähigkeit.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Der Transfer von Probenflüssigkeiten oder von Reagenzflüssigkeiten erfolgt üblicherweise mit automatischen Pipettiervorrichtungen. Solche Pipettiervorrichtungen umfassen in der Regel eine senkrecht an einem horizontal verfahrbaren oder schwenkbaren Transferarm angeordnete und höhenverstellbare Pipettiernadel, die mit einer Pumpeinheit verbunden ist, so dass mit der Pipettiernadel ein gewünschtes Volumen einer Flüssigkeit aus einem Behälter entnommen und an einem anderen Ort in einen Zielbehälter abgegeben werden kann. Üblicherweise wird die Pipettiernadel mit Hilfe des Transferarms an eine Position über einem Flüssigkeitsbehälter verfahren und dann in den Flüssigkeitsbehälter und die darin enthaltene Flüssigkeit abgesenkt. Nach Entnahme des gewünschten Volumens wird die Pipettiernadel nach oben gefahren und dann mit Hilfe des horizontal verfahrbaren oder schwenkbaren Transferarms an die gewünschte Zielposition über einem Flüssigkeitsbehälter gefahren, beispielsweise über eine Messzelle. Dort wird die Pipettiernadel wieder abgesenkt, und die Flüssigkeitsmenge wird abgegeben.

Die pipettierten Flüssigkeitsvolumina liegen in einem Bereich von etwa 5 bis 500 Mikrolitern. Da Pipettierfehler oder Pipettierungenauigkeiten zu fehlerhaften Messergebnissen führen können, werden an die Pipettiergenauigkeit höchste Ansprüche gestellt. Ausschlaggebend ist dabei unter anderem die Präzision der mit der Pipettiervorrichtung verbundenen Dosierpumpe. Es ist bekannt, Dosierpumpen in Form von Hubkolbenpumpen zu verwenden, die mit einem flüssigen oder gasförmigen Systemmedium gefüllt sind und mit ihrer Auslassöffnung über ein Schlauchsystem mit der Pipettiernadel verbunden sind. Durch Bewegen des Pumpenkolbens wird ein Unterdruck erzeugt, um mit der Pipettiernadel Flüssigkeit aus einem Flüssigkeitsbehälter anzusaugen bzw. ein Überdruck erzeugt, um die Flüssigkeit wieder abzugeben. Üblicherweise stehen derartige Dosierpumpen über eine Steuerleitung mit einer Steuereinrichtung in Verbindung, die anhand bestimmter Steuergrößen den Kolbenhub entsprechend der zu pipettierenden Volumenmenge verändern kann.

Problematisch ist, dass eine Dosierpumpe mit der Zeit verschleißt, wodurch es zu unerwünschten Pipettierungenauigkeiten und im schlimmsten Fall zum abrupten Ausfall der Dosierpumpe und damit der Pipettiervorrichtung kommen kann. Für den Austausch einer Dosierpumpe ist immer der Eingriff eines Benutzers, meistens sogar eines speziell geschulten Servicetechnikers erforderlich. Der unvorhergesehene Ausfall einer Dosierpumpe, der die Durchsatzgeschwindigkeit des gesamten Analysegerätes vermindert und unter Umständen einen völligen Stillstand des Analysegeräts verursacht, ist also möglichst zu vermeiden.

Es wäre daher wünschenswert, vor der ersten Inbetriebnahme einer Dosierpumpe oder auch nach einer bestimmten Betriebszeit prüfen zu können, ob die Dosierpumpe für den Routinebetrieb hinreichend funktionsfähig ist oder ob die Dosierpumpe ausgetauscht werden sollte.

In DE-A1-102006002763 und WO-A1-96/08648 sind unterschiedliche Verfahren zur Überprüfung der Funktionsfähigkeit einer Dosierpumpe beschrieben. In WO-A1-92/14930 ist eine Dosierpumpe mit einem Zylinder, einem in dem Zylinder beweglichen Kolben und einem Motor, wobei von dem Motor eine Antriebskraft auf den Kolben übertragbar ist, und mit einer Steuereinrichtung beschrieben, wobei die Steuereinrichtung so konfiguriert ist, dass sie ein Verfahren zur Überprüfung der Funktionsfähigkeit der Dosierpumpe steuert. Bei diesem Steuerverfahren erfolgt die Zustandsüberwachung auf Basis empirischer, durch die Steuereinrichtung selbst bestimmter, Schwellwerte auf Basis der auf den Hubkolben ausgeübten Kraft und des Hubs.

Der vorliegenden Erfindung lag die Aufgabe zugrunde, ein weiteres Verfahren zur Überprüfung der Funktionsfähigkeit einer Dosierpumpe bereit zu stellen, mit dem ohne Eingriff eines Benutzers, also automatisch, festgestellt werden kann, ob die Dosierpumpe für den Routinebetrieb hinreichend funktionsfähig ist oder ob die Dosierpumpe ausgetauscht werden sollte.

Die Aufgabe wird durch ein Verfahren mit den Merkmalen des Anspruchs 1 gelöst, nämlich dadurch, dass geprüft wird, ob die Antriebskraft, die erforderlich ist, um den Kolben von einer Startposition in eine Zielposition zu verfahren, einen bestimmten Schwellwert nicht überschreitet.

Die Erfindung betrifft daher ein Verfahren zur Überprüfung der Funktionsfähigkeit einer Dosierpumpe, die einen Zylinder und einen in dem Zylinder beweglichen, motorbetriebenen Kolben umfasst, wobei der Kolben zwischen einer Startposition und einer Zielposition verfahrbar ist. Das Verfahren umfasst die folgenden Schritte:
a) Verfahren des Kolbens von der Startposition in Richtung der Zielposition mit einer vorab festgelegten Antriebskraft F0;
b) Prüfen, ob der Kolben die Zielposition erreicht;
c) Zurückverfahren des Kolbens in die Startposition mit einer vorab festgelegten Antriebskraft F2, wobei die Antriebskraft F0 kleiner ist als die Antriebskraft F2; und wobei
d) -wenn festgestellt wird, dass der Kolben die Zielposition erreicht- ein der Dosierpumpe zugeordnetes Signal erzeugt wird, das die Funktionsfähigkeit der Dosierpumpe anzeigt; und wobei
e) -wenn festgestellt wird, dass der Kolben die Zielposition nicht erreicht- die Schritte a) bis c) mit einer um einen Betrag n erhöhten Antriebskraft FO+n wiederholt werden, wobei die Antriebskraft FO+n kleiner ist als die Antriebskraft F2.

Unter einer "Startposition des Kolbens" und einer "Zielposition des Kolbens" sind zwei unterschiedliche Positionen entlang des maximalen linearen Verfahrweges des Kolbens innerhalb des Zylinders zu verstehen, wobei sich die Zielposition nahe der Auslassöffnung des Zylinders und - relativ dazu - die Startposition weiter entfernt von der Auslassöffnung des Zylinders befindet. Sowohl die Start- als auch die Zielposition können mechanisch festgelegt sein, beispielsweise durch Anschlag des Kolbens am einen bzw. am anderen Ende des Zylinders. Alternativ können die Start- und/oder die Zielposition auch willkürlich entlang des Verfahrweges festgelegt werden.

Vor der Inbetriebnahme der Dosierpumpe werden vorzugsweise die Antriebskraft F0, die Antriebskraft F2 und der Betrag n, um den die Antriebskraft F0 mehrfach erhöht werden kann, festgelegt.

Die Antriebskraft F2 wird sinnvollerweise so gewählt, dass sie das Verfahren des Kolbens von der Zielposition zurück in die Startposition der zu betreibenden Pumpe sicher gewährleistet.

Die Antriebskraft F0 wird dann so gewählt, dass sie kleiner ist als die Antriebskraft F2.

Vorzugsweise entspricht die Antriebskraft F0 etwa der Hälfte der Antriebskraft F2.

Der Betrag n einer Antriebskraft, um den die Antriebskraft F0 mehrfach erhöht werden kann, entspricht einem Bruchteil der Antriebskraft F0, beispielsweise 10-30 % der Antriebskraft F0.

Die Prüfung, ob der Kolben die Zielposition erreicht, kann beispielsweise dadurch erfolgen, dass mit Hilfe geeigneter Sensoren, z.B. mit einem Encoder am Schrittmotor, gemessen wird, ob die definierte Wegstrecke zwischen Start- und Zielposition tatsächlich überwunden wurde, ob eine definierte Schrittzahl vom Schrittmotor durchgeführt werden konnte und ähnliches.

Wenn in dem Verfahren festgestellt wird, dass der Kolben bereits mit der Antriebskraft F0 die Zielposition erreicht, wird ein der Dosierpumpe zugeordnetes Signal erzeugt, das die Funktionsfähigkeit der Dosierpumpe anzeigt. Die Dosierpumpe kann daraufhin erstmalig in Betrieb genommen werden bzw. weiter betrieben werden, ohne dass eine Einschränkung der Funktionsfähigkeit zu erwarten ist.

Wird jedoch festgestellt, dass der Kolben die Zielposition nicht erreicht, werden die Schritte a) bis c) mit einer um den Betrag n erhöhten Antriebskraft FO+n wiederholt, wobei die Antriebskraft FO+n immer kleiner ist als die Antriebskraft F2. Die Schritte a) bis c) werden sooft wiederholt, bis entweder festgestellt wird, dass der Kolben die Zielposition erreicht und die dazu benötigte Antriebskraft FO+xn eine vorab festgelegte maximale Antriebskraft F1, die kleiner ist als die Antriebskraft F2, nicht überschreitet oder bis festgestellt wird, dass der Kolben die Zielposition mit der vorab festgelegten maximalen Antriebskraft F1 nicht erreicht.

Wird dann festgestellt, dass die benötigte Antriebskraft FO+xn eine vorab festgelegte maximale Antriebskraft F1 nicht überschreitet, wird ein der Dosierpumpe zugeordnetes Signal erzeugt, das die Funktionsfähigkeit der Dosierpumpe anzeigt. Die Dosierpumpe kann daraufhin erstmalig in Betrieb genommen werden bzw. weiter betrieben werden, ohne dass eine Einschränkung der Funktionsfähigkeit zu erwarten ist.

Wird hingegen festgestellt, dass der Kolben die Zielposition mit der vorab festgelegten maximalen Antriebskraft F1 nicht erreicht, wird ein der Dosierpumpe zugeordnetes Austauschsignal erzeugt. Das Austauschsignal richtet sich an einen Benutzer, der dann rechtzeitig den Austausch oder die Wartung der betreffenden Dosierpumpe vornehmen kann.

In einer besonders bevorzugten Ausführungsform des erfindungsgemäßen Verfahrens zum Betrieb einer Dosierpumpe wird das Verhältnis der Antriebskraft F2 und der Antriebskraft F0 bzw. FO+xn als ein Qualitätskriterium für die Leistungsreserve der Dosierpumpe bestimmt. Es wurde gefunden, dass wenn die Antriebskraft F0 bzw. FO+xn, die benötigt wird damit der Kolben die Zielposition erreicht, mehr als 80 % der Antriebskraft F2 beträgt, ein zu hohes Verklemmungsrisiko besteht und die Dosierpumpe daher ausgetauscht werden sollte. Bevozugterweise wird also ein der Dosierpumpe zugeordnetes Austauschsignal erzeugt, wenn die Antriebskraft F0 bzw. FO+xn, die benötigt wird, damit der Kolben die Zielposition erreicht, mehr als 80 % der Antriebskraft F2 beträgt. Mit anderen Worten beträgt die vorab festgelegte maximale Antriebskraft F1 bevorzugterweise 80 % der Antriebskraft F2.
Alternativ kann der Quotient (Q1) der Antriebskraft F2 und der Antriebskraft F0 bzw. FO+xn, die benötigt wird, damit der Kolben die Zielposition erreicht, bestimmt werden. Wird ein Quotient F2:F0 bzw. FO+xn kleiner 1,25 erhalten, wird ein der Dosierpumpe zugeordnetes Austauschsignal erzeugt.
In einer weiteren Ausführungsform wird die Dosierpumpe zusätzlich außer Betrieb gesetzt, wenn der Kolben die Zielposition mit der vorab festgelegten maximalen Antriebskraft F1 nicht erreicht. Auf diese Weise wird sichergestellt, dass kein potenziell fehlerbehafteter Dosiervorgang oder ein unkontrollierbarer Pumpenausfall durch Verklemmen stattfinden kann.
Ein weiterer Gegenstand der vorliegenden Erfindung ist ein Verfahren zum Betrieb einer Dosierpumpe, wobei vor der Inbetriebnahme der Dosierpumpe die Funktionsfähigkeit der Dosierpumpe mit dem vorbeschriebenen erfindungsgemäßen Verfahren überprüft wird und dann -wenn ein der Dosierpumpe zugeordnetes Signal erzeugt wurde, das die Funktionsfähigkeit der Dosierpumpe anzeigt- nach Inbetriebnahme der Dosierpumpe der Kolben von der Startposition in Richtung der Zielposition und wieder zurück mit der Antriebskraft F2 erfolgt.
Noch ein weiterer Gegenstand der vorliegenden Erfindung ist eine Dosierpumpe mit den Merkmalen des Anspruchs 7, nämlich eine Dosierpumpe mit einem Zylinder, einem in dem Zylinder beweglichen Kolben und einem Motor, wobei von dem Motor eine Antriebskraft auf den Kolben übertragbar ist, wodurch der Kolben zwischen einer Startposition und Zielposition verfahrbar ist. Die Dosierpumpe weist ferner eine Steuereinrichtung auf, die so konfiguriert ist, dass sie das Verfahren zum Betrieb der Dosierpumpe mit den Merkmalen des Anspruchs mit den folgenden Schritten steuert:
a) Verfahren des Kolbens von der Startposition in Richtung der Zielposition mit einer vorab festgelegten Antriebskraft F0;
b) Prüfen, ob der Kolben die Zielposition erreicht; und
c) Zurückverfahren des Kolbens in die Startposition mit einer vorab festgelegten Antriebskraft F2, wobei die Antriebskraft F0 kleiner ist als die Antriebskraft F2 und wobei
d) -wenn festgestellt wird, dass der Kolben die Zielposition erreicht- ein der Dosierpumpe zugeordnetes Signal erzeugt wird, das die Funktionsfähigkeit der Dosierpumpe anzeigt; und wobei
e) -wenn festgestellt wird, dass der Kolben die Zielposition nicht erreicht- die Schritte a) bis c) mit einer um einen Betrag n erhöhten Antriebskraft FO+n wiederholt werden, wobei die Antriebskraft FO+n kleiner ist als die Antriebskraft F2.

Bei dem Motor zum Antrieb des Kolbens kann es sich um einen elektrischen Motor handeln. Bevorzugterweise handelt es sich um einen elektrischen Schrittmotor, besonders bevorzugt um einen Schrittmotor mit einem Sensor zur Positionsrückmeldung (Encoder) und einem Regler. Zur Erzeugung der Antriebskräfte F0, FO+n und F2 wird der Schrittmotor mit unterschiedlichen Stromwerten betrieben.

In einer bevorzugten Ausführungsform ist die Steuereinrichtung ferner so konfiguriert, dass sie ferner steuert, dass in Schritt e) die Schritte a) bis c) mit einer schrittweise um einen Betrag xn erhöhten Antriebskraft FO+xn, die kleiner ist als die Antriebskraft F2, wiederholt werden,
i. bis festgestellt wird, dass der Kolben die Zielposition erreicht und die dazu benötigte Antriebskraft FO+xn eine vorab festgelegte maximale Antriebskraft F1, die kleiner ist als die Antriebskraft F2, nicht überschreitet und dann ein der Dosierpumpe zugeordnetes Signal erzeugt wird, das die Funktionsfähigkeit der Dosierpumpe anzeigt; oder
ii. bis festgestellt wird, dass der Kolben die Zielposition mit der vorab festgelegten maximalen Antriebskraft F1 nicht erreicht und dann ein der Dosierpumpe zugeordnetes Austauschsignal erzeugt wird.

Weiterhin kann die Steuereinrichtung zusätzlich so konfiguriert sein, dass sie ferner steuert, dass die Dosierpumpe außer Betrieb gesetzt wird, wenn der Kolben die Zielposition mit der vorab festgelegten maximalen Antriebskraft F1 nicht erreicht.

Vorzugsweise weist die Steuereinrichtung der erfindungsgemäßen Dosierpumpe eine Speichereinheit auf, in der die vorab festgelegte Antriebskraft F2, die vorab festgelegte Antriebskraft F0, der Betrag n zur Erhöhung der Antriebskraft F0 und/oder die vorab festgelegte maximale Antriebskraft F1 gespeichert sind. Der Begriff "vorab festgelegt" bedeutet, dass die Kenngrößen vor Inbetriebnahme der Dosierpumpe durch geeignete Testreihen ermittelt wurden.

Ein weiterer Gegenstand der vorliegenden Erfindung ist ein automatisches Analysegerät mit mindestens einer Pipettiervorrichtung, die eine erfindungsgemäße Dosierpumpe umfasst. Das Analysegerät kann mehrere derartige Pipettiervorrichtungen aufweisen, beispielweise eine erste Pipettiervorrichtung zum Transfer von Probenflüssigkeit, wie beispielsweise Blut, Plasma, Serum, Urin, Liquor etc., und eine zweite Pipettiervorrichtung zum Transfer von Reagenzflüssigkeiten, wie beispielsweise Puffer, Antikörperlösungen, Antigenlösungen etc.

Die Pipettiervorrichtungen können an horizontal verfahrbaren oder schwenkbaren Transferarmen befestigt sein, die automatisch bewegbar sind. Eine Pipettiervorrichtung umfasst eine Hohlnadel, mit der ein zu transferierendes Flüssigkeitsvolumen aufgesaugt und an anderer Stelle wieder abgegeben werden kann. Dazu ist die Pipettiernadel über ein Schlauchsystem mit einer erfindungsgemäßen Dosierpumpe verbunden.

Vorzugsweise umfasst das automatische Analysegerät ferner ein Ausgabemedium, das das von der Steuereinrichtung der Dosierpumpe erzeugte Signal, das die Funktionsfähigkeit der Dosierpumpe anzeigt, und/oder das Austauschsignal in ein visuell und/oder in ein akustisch wahrnehmbares Signal umwandelt und dieses anzeigt. Das Ausgabemedium kann beispielsweise ein Bildschirm, eine Warnlampe oder ein Lautsprecher sein und das von der Steuereinrichtung der Dosierpumpe erzeugte Austauschsignal in ein visuell und/oder in ein akustisch wahrnehmbares Signal umwandeln und dieses anzeigen. Das Austauschsignal kann beispielsweise in Form einer Textnachricht oder in Form eines Piktogramms auf einem Bildschirm des automatischen Analysegeräts angezeigt werden oder in Form eines akustischen Signals von einem Lautsprecher des automatischen Analysegeräts abgegeben werden oder in Form eines visuellen Signals von einer Warnlampe des automatischen Analysegeräts abgegeben werden.

Die Erfindung wird im Folgenden anhand einer Zeichnung erläutert.

Darin zeigen
- FIG. 1: ein erfindungsgemäßes automatisches Analysegerät;
- FIG. 2: eine Pipettiervorrichtung mit einer erfindungsgemäßen Dosierpumpe;
- FIG. 3: ein Ablaufdiagramm eines Verfahrens zur Überprüfung der Funktionsfähigkeit einer Dosierpumpe.

Gleiche Teile sind in allen Figuren mit denselben Bezugszeichen versehen.

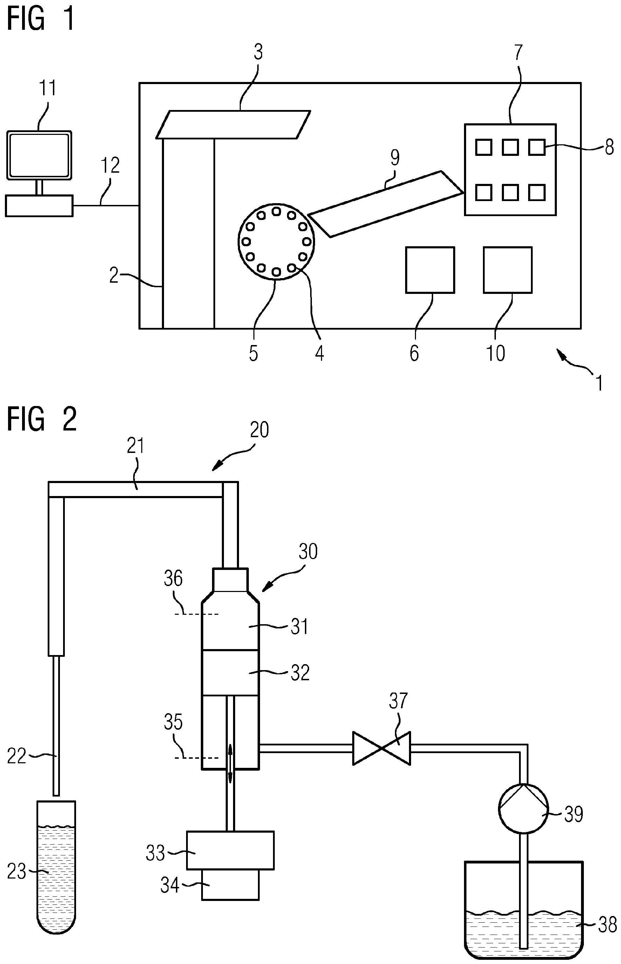

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur von Funktionseinheiten und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette in einer Aufnahmeposition 4 abgegeben. Nach der Inkubationszeit wird die Küvette mit dem Reaktionsansatz von einem nicht dargestellten Transferarm mit einem Greifer von der Inkubationseinrichtung 5 in eine photometrische Messeinheit 10 transportiert, wo die Extinktion des Reaktionsansatzes gemessen wird.

Der gesamte Prozess wird von einer zentralen Steuereinheit 11, wie z.B. von einem über eine Datenleitung 12 angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

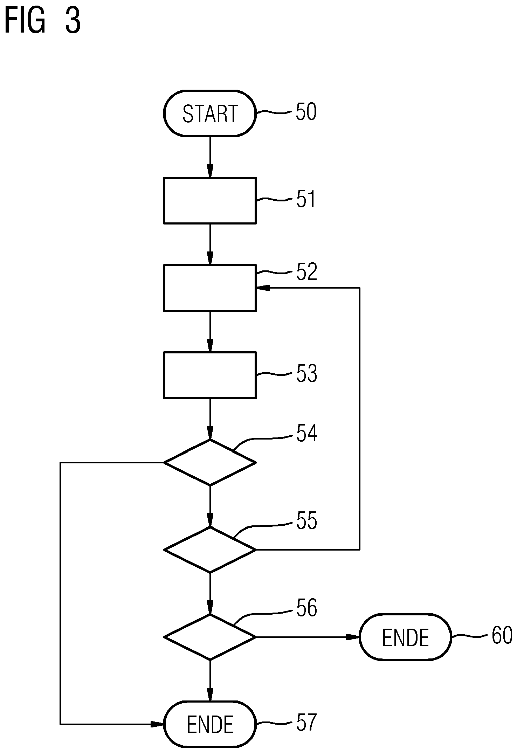

FIG. 2 ist eine schematische Darstellung einer Pipettiervorrichtung 20 mit einer erfindungsgemäßen Dosierpumpe 30. Die Pipettiervorrichtung 20 umfasst eine an einem horizontal verfahrbaren Transferam 21 befestigte, höhenverstellbare Pipettiernadel 22, mit der Flüssigkeit aus einem Flüssigkeitsgefäß 23 entnommen bzw. in ein Flüssigkeitsgefäß 23 abgegeben werden kann. Die Dosierpumpe 30 umfasst einen Zylinder 31 und einen in dem Zylinder 31 linear verfahrbaren Kolben 32. Das Volumen des Zylinders 31 beträgt 500 Mikroliter. Der Kolben 32 ist mit einem Schrittmotor 33 gekoppelt, der einen Encoder 34 als Sensor zur Positionsrückmeldung umfasst. Der Schrittmotor 33 kann mit unterschiedlichen Stromstärken betrieben werden, so dass unterschiedlich starke Antriebskräfte auf den Kolben 32 ausgeübt werden können. Für die Überprüfung der Funktionsfähigkeit der Dosierpumpe 30, die in Bezug auf FIG. 3 näher erläutert wird, wird der Kolben 32 mit definierten Antriebskräften zwischen der vorab festgelegten Startposition 35 bei -600 Schritten und der vorab festgelegten Zielposition 36 bei -800 Schritten verfahren. Im Routinebetrieb der Pipettiervorrichtung 20 werden bei geschlossenem Ventil 37 durch Bewegung des Kolbens 32 definierte Flüssigkeitsvolumina von der Pipettiernadel 22 aufgenommen bzw. abgegeben. Bei geöffnetem Ventil 37 kann zu Reinigungszwecken eine Reinigungslösung 38, wie beispielsweise deionisiertes Wasser oder eine Desinfektionslösung, mittels einer Pumpvorrichtung 39 durch die Dosierpumpe 30 und die Pipettiernadel 22 gepumpt werden.

FIG. 3 stellt ein Ablaufdiagramm eines Verfahrens zur Überprüfung der Funktionsfähigkeit der Dosierpumpe 30 der Pipettiervorrichtung 20 aus FIG. 2 dar, wobei letztere Teil eines automatischen Analysegeräts 1 ist. In Schritt 50 wird von der zentralen Steuereinheit 11 des automatischen Analysegeräts 1 ein Startsignal für die Durchführung des Verfahrens zur Überprüfung der Funktionsfähigkeit der Dosierpumpe 30 abgegeben. Daraufhin werden in Schritt 51 zunächst aus der Steuereinrichtung der Dosierpumpe 30 die darin in einer Konfigurationsdatei gespeicherten, vorab festgelegten Werte für die Antriebskraft F2 (600 mA Schrittmotorstrom), die Antriebskraft F0 (300 mA Schrittmotorstrom), den Betrag n zur Erhöhung der Antriebskraft F0 (90 mA) und die maximale Antriebskraft F1 (80 % von F2, also 480 mA Schrittmotorstrom) ausgelesen, und der Kolben 32 wird in Schritt 52 mit der Antriebskraft F2 in die Startposition 35 verfahren. Anschließend, in Schritt 53, wird der Kolben 32 mit der Antriebskraft F0 in Richtung der Zielposition 36 verfahren. In Schritt 54 wird geprüft, ob der Kolben 32 mit der aufgebrachten Antriebskraft (F0) die Zielposition 36 erreicht hat. Ist dies der Fall, wird in Schritt 57 ein der Dosierpumpe 30 zugeordnetes Signal erzeugt, das die Funktionsfähigkeit der Dosierpumpe 30 anzeigt, und der Prozess wird beendet. Wird hingegen in Schritt 54 festgestellt, dass der Kolben 32 mit der aufgebrachten Antriebskraft (F0) die Zielposition 36 nicht erreicht hat, wird in Schritt 55 die Antriebskraft F0 um den Betrag n (90 mA) erhöht, und die Schritte 52, 53 und 54 werden solange mit einer schrittweise erhöhten Antriebskraft FO+xn wiederholt bis der Kolben 32 die Zielposition 36 erreicht hat. In Schritt 56 wird dann geprüft, ob die Antriebskraft FO+xn (300 mA + x*90 mA) die maximale Antriebskraft F1 (480 mA) nicht überschreitet. Wird festgestellt, dass die Antriebskraft FO+xn, mit der die Zielposition 36 erreicht wurde, F1 nicht überschreitet, wird in Schritt 57 ein der Dosierpumpe 30 zugeordnetes Signal erzeugt, das die Funktionsfähigkeit der Dosierpumpe 30 anzeigt, und es wird der Prozess wird beendet. Wird hingegen festgestellt, dass die Antriebskraft FO+xn, mit der die Zielposition 36 erreicht wurde, F1 überschreitet, wird in Schritt 60 ein der Dosierpumpe 30 zugeordnetes Austauschsignal erzeugt, das die mangelnde Funktionsfähigkeit der Dosierpumpe 30 anzeigt, und der Prozess wird beendet.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Messeinheit
- 11: zentrale Steuereinheit
- 12: Datenleitung

- 20: Pipettiervorrichtung
- 21: Transferarm
- 22: Pipettiernadel
- 23: Flüssigkeitsgefäß
- 30: Dosierpumpe
- 31: Zylinder
- 32: Kolben
- 33: Schrittmotor
- 34: Encoder
- 35: Startposition
- 36: Zielposition
- 37: Ventil
- 38: Reinigungslösung
- 39: Pumpvorrichtung

- 50-60: Verfahrensschritte

## Patentansprüche

1. Verfahren zur Überprüfung der Funktionsfähigkeit einer Dosierpumpe (30), die einen Zylinder (31) und einen in dem Zylinder beweglichen, motorbetriebenen Kolben (32) umfasst, wobei der Kolben (32) zwischen einer Startposition (35) und einer Zielposition (36) verfahrbar ist, das Verfahren umfassend die folgenden Schritte:
a) Verfahren des Kolbens (32) von der Startposition (35) in Richtung der Zielposition (36) mit einer vorab festgelegten Antriebskraft F0;
b) Prüfen, ob der Kolben (32) die Zielposition (36) erreicht;
c) Zurückverfahren des Kolbens (32) in die Startposition (35) mit einer vorab festgelegten Antriebskraft F2, wobei die Antriebskraft F0 kleiner ist als die Antriebskraft F2; und wobei
d) -wenn festgestellt wird, dass der Kolben (32) die Zielposition (36) erreicht- ein der Dosierpumpe (30) zugeordnetes Signal erzeugt wird, das die Funktionsfähigkeit der Dosierpumpe (30) anzeigt; und wobei
e) -wenn festgestellt wird, dass der Kolben (32) die Zielposition (36) nicht erreicht- die Schritte a) bis c) mit einer um einen Betrag n erhöhten Antriebskraft FO+n wiederholt werden, wobei die Antriebskraft FO+n kleiner ist als die Antriebskraft F2.

2. Verfahren gemäß Anspruch 1, wobei in Schritt e) die Schritte a) bis c) mit einer schrittweise um einen Betrag xn erhöhten Antriebskraft F0+xn, die kleiner ist als die Antriebskraft F2, wiederholt werden,
i) bis festgestellt wird, dass der Kolben (32) die Zielposition (36) erreicht und die dazu benötigte Antriebskraft FO+xn eine vorab festgelegte maximale Antriebskraft F1, die kleiner ist als die Antriebskraft F2, nicht überschreitet und dann ein der Dosierpumpe (30) zugeordnetes Signal erzeugt wird, das die Funktionsfähigkeit der Dosierpumpe (30) anzeigt; oder
ii) bis festgestellt wird, dass der Kolben (32) die Zielposition (36) mit der vorab festgelegten maximalen Antriebskraft F1 nicht erreicht und dann ein der Dosierpumpe (30) zugeordnetes Austauschsignal erzeugt wird.

3. Verfahren gemäß Anspruch 2, bei dem die Dosierpumpe (30) außer Betrieb gesetzt wird, wenn der Kolben (32) die Zielposition (36) mit der vorab festgelegten maximalen Antriebskraft F1 nicht erreicht.

4. Verfahren gemäß einem der Ansprüche 1 bis 3, bei dem die Antriebskraft F0 etwa der Hälfte der Antriebskraft F2 entspricht.

5. Verfahren gemäß einem der Ansprüche 2 bis 4, bei dem die vorab festgelegte maximale Antriebskraft F1 80 % der Antriebskraft F2 beträgt.

6. Verfahren zum Betrieb einer Dosierpumpe (30), wobei vor der Inbetriebnahme der Dosierpumpe (30) die Funktionsfähigkeit der Dosierpumpe (30) mit einem Verfahren gemäß einem der Ansprüche 1 bis 5 überprüft wird und dann -wenn ein der Dosierpumpe (30) zugeordnetes Signal erzeugt wurde, das die Funktionsfähigkeit der Dosierpumpe (30) anzeigt- nach Inbetriebnahme der Dosierpumpe (30) der Kolben (32) von der Startposition (35) in Richtung der Zielposition (36) und wieder zurück mit der Antriebskraft F2 erfolgt.

7. Dosierpumpe (30) mit einem Zylinder (31), einem in dem Zylinder beweglichen Kolben (32) und einem Motor (33), wobei von dem Motor (33) eine Antriebskraft auf den Kolben (32) übertragbar ist, wodurch der Kolben (32) zwischen einer Startposition (35) und einer Zielposition (36) verfahrbar ist, **dadurch gekennzeichnet, dass** die Dosierpumpe (30) eine Steuereinrichtung aufweist, die so konfiguriert ist, dass sie ein Verfahren zur Überprüfung der Funktionsfähigkeit der Dosierpumpe (30) gemäß einem der Ansprüche 1 bis 3 steuert.

8. Dosierpumpe (30) gemäß Anspruch 7, bei der die Steuereinrichtung eine Speichereinheit aufweist, in der die Antriebskraft F2, die Antriebskraft F0, der Betrag n zur Erhöhung der Antriebskraft F0 und/oder die maximale Antriebskraft F1 gespeichert sind.

9. Automatisches Analysegerät (1) mit mindestens einer Pipettiervorrichtung (3, 9, 20), die eine Dosierpumpe (30) gemäß einem der Ansprüche 7 und 8 umfasst.

10. Automatisches Analysegerät (1) gemäß Anspruch 9 und ferner mit einem Ausgabemedium, wobei das Ausgabemedium das von der Steuereinrichtung der Dosierpumpe (30) erzeugte Signal, das die Funktionsfähigkeit der Dosierpumpe (30) anzeigt, und/oder das Austauschsignal in ein visuell und/oder in ein akustisch wahrnehmbares Signal umwandelt und dieses anzeigt.

## Claims

1. Method for checking the functionality of a metering pump (30) comprising a cylinder (31) and a motor-driven plunger (32) which is movable in the cylinder, the plunger (32) being displaceable between a start position (35) and a target position (36), the method comprising the following steps:
a) displacing the plunger (32) from the start position (35) in the direction of the target position (36) with a driving force F0 set in advance;
b) monitoring whether the plunger (32) arrives at the target position (36);
c) returning the plunger (32) to the start position (35) with a driving force F2 set in advance, the driving force F0 being less than the driving force F2; and wherein
d) a signal assigned to the metering pump (30) is generated, said signal indicating the functionality of the metering pump (30) - if it is determined that the plunger (32) reaches the target position (36); and wherein
e) the steps a) to c) are repeated with a driving force FO+n increased by a value n, the driving force FO+n being less than the driving force F2 - if it is determined that the plunger (32) does not reach the target position.

2. Method according to Claim 1, wherein the steps a) to c) are repeated in step e) with a driving force FO+xn which is successively increased by a value xn, said driving force being less than the driving force F2,
i) until it is determined that the plunger (32) reaches the target position (36) and the driving force FO+xn required in this respect does not exceed a maximum driving force F1, which is set in advance and less than the driving force F2, and, thereupon, a signal assigned to the metering pump (30) indicating the functionality of the metering pump (30) is generated; or
ii)until it is determined that the plunger (32) does not reach the target position (36) with the maximum driving force F1 set in advance and, thereupon, a replacement signal assigned to the metering pump (30) is generated.

3. Method according to Claim 2, wherein the metering pump (30) is rendered inoperative if the plunger (32) does not reach the target position (36) with the maximum driving force F1 set in advance.

4. Method according to one of Claims 1 to 3, wherein the driving force F0 corresponds to approximately half of the driving force F2.

5. Method according to one of Claims 2 to 4, wherein the maximum driving force F1 set in advance is 80% of the driving force F2.

6. Method for operating a metering pump (30), wherein the functionality of the metering pump (30) is tested prior to activation of the metering pump (30) by means of a method according to one of Claims 1 to 5 and - if a signal assigned to the metering pump (30) and indicating the functionality of the metering pump (30) was generated - the plunger (32) is moved from the start position (35) in the direction of the target position (36) and back again with the driving force F2 after activating the metering pump (30).

7. Metering pump (30) comprising a cylinder (31), a plunger (32) which is movable in the cylinder and a motor (33), wherein a driving force is transferable from the motor (33) onto the plunger (32), as a result of which the plunger (32) is displaceable between a start position (35) and a target position (36), **characterized in that** the metering pump (30) has a control device configured in such a way that it controls a method for checking the functionality of the metering pump (30) according to one of Claims 1 to 3.

8. Metering pump (30) according to Claim 7, wherein the control device comprises a memory unit in which the driving force F2, the driving force F0, the value n for increasing the driving force F0 and/or the maximum driving force F1 are stored.

9. Automated analysis machine (1) comprising at least one pipetting apparatus (3, 9, 20) which comprises a metering pump (30) according to one of Claims 7 and 8.

10. Automated analysis machine (1) according to Claim 9 and further comprising an output medium, wherein the output medium converts the signal indicating the functionality of the metering pump (30) generated by the control device of the metering pump (30) and/or the replacement signal into a signal that is perceivable visually and/or acoustically and indicates the latter.

## Revendications

1. Procédé de contrôle de l'aptitude à fonctionner d'une pompe (30) doseuse, qui comprend un cylindre (31) et un piston (32), mobile dans le cylindre en étant entraîné par un moteur, le piston (32) pouvant être déplacé entre une position (35) initiale et une position (36) cible, le procédé comprenant les stades suivants :
a) déplacement du piston (32) de la position (35) initiale en direction de la position (36) cible par une force FO d'entraînement fixée à l'avance;
b) contrôle du point de savoir si le piston (32) atteint la position (36) cible;
c) retour du piston (32) à la position (35) initiale par une force F2 d'entraînement fixée à l'avance, la force F0 d'entraînement étant plus petite que la force F2 d'entraînement; et dans lequel
d) s'il est constaté que le piston (32) atteint la position (36) cible, on produit un signal, qui est associé à la pompe (30) doseuse et qui indique l'aptitude à fonctionner de la pompe (30) doseuse; et dans lequel
e) s'il est constaté, que le piston (32) n'atteint pas la position (36) cible, on répète les stades a) à c) avec une force FO+n d'entraînement augmentée d'une valeur n, la force FO+n d'entraînement étant plus petite que la force F2 d'entraînement.

2. Procédé suivant la revendication 1, dans lequel dans le stade e), on répète les stades a) à c) avec une force FO+xn d'entraînement augmentée d'une valeur xn, qui est plus petite que la force F2 d'entraînement,
i) jusqu'à constatation que le piston (32) atteint la position (36) cible et que la force FO+xn d'entraînement nécessaire à cet effet, ne dépasse une force F1 d'entraînement maximum fixée à l'avance, qui est plus petite que la force F2 d'entraînement, et alors on produit un signal qui est associé à la pompe (30) doseuse et qui indique l'aptitude à fonctionner de la pompe (30) doseuse; ou
ii) jusqu'à constatation que le piston (32) n'atteint pas la position (36) cible par la force F1 d'entraînement maximum fixée à l'avance et alors on produit un signal de remplacement associé à la pompe (30) doseuse.

3. Procédé suivant la revendication 2, dans lequel on met la pompe (30) doseuse hors de fonctionnement, si le piston (32) n'atteint pas la position (36) cible par la force F1 d'entraînement maximum fixée à l'avance.

4. Procédé suivant l'une des revendications 1 à 3, dans lequel la force FO d'entraînement correspond à peu près à la moitié de la force F2 d'entraînement.

5. Procédé suivant l'une des revendications 2 à 4, dans lequel la force F1 d'entraînement maximum fixée à l'avance représente 80 % de la force F2 d'entraînement.

6. Procédé pour faire fonctionner une pompe (30) doseuse, dans lequel avant la mise en service de la pompe (30) doseuse, on contrôle l'aptitude à fonctionner de la pompe (30) doseuse par un procédé suivant l'une des revendications 1 à 5, et ensuite, si on a obtenu un signal associé à la pompe (30) doseuse, qui indique l'aptitude à fonctionner de la pompe (30) doseuse, après la mise en service de la pompe (30) doseuse, le piston (32) va de la position (35) initiale en direction de la position (36) cible et revient par la force F2 d'entraînement.

7. Pompe (30) doseuse comprenant un cylindre (31), un piston (32) mobile dans le cylindre et un moteur (33), une force d'entraînement pouvant être appliquée au piston (32) par le moteur (33), grâce à quoi le piston (32) peut être déplacé entre une position (35) initiale et une position (36) cible, **caractérisée en ce que** la pompe (30) doseuse a un dispositif de commande configurée de manière à commander un procédé de contrôle de l'aptitude à fonctionner de la pompe (30) doseuse suivant l'une des revendications 1 à 3.

8. Pompe (30) doseuse suivant la revendication 7, dans laquelle le dispositif de commande a une unité de mémoire, dans laquelle sont mémorisées la force F2 d'entraînement, la force F0 d'entraînement, la valeur n de l'augmentation de la force F0 d'entraînement et/ou la force F1 d'entraînement maximum.

9. Appareil (1) d'analyse automatique comprenant au moins un système (3, 9, 20) de pipetage, qui comprend une pompe (30) doseuse suivant l'une des revendications 7 et 8.

10. Appareil (1) d'analyse automatique suivant la revendication 9 et en outre ayant un support de sortie, le support de sortie transformant le signal produit par le dispositif de commande de la pompe (30) doseuse et indiquant l'aptitude à fonctionner de la pompe (30) doseuse et/ou le signal de remplacement en un signal perceptible visuellement et/ou acoustiquement et affichant celui-ci.
